# EUROPEAN PATENT APPLICATION

(11) **EP 4 286 549 A1**
(43) Date of publication of application: **06.12.2023**
(21) Application number: 22177186.8
(22) Date of filing: 03.06.2022
(51) Int. Cl.: C22B 7/00, C01D 15/08, C22B 26/12, H01M 10/54

(54) **MECHANOCHEMICALLY INDUCED UNIVERSAL METHOD FOR RECYCLING LITHIUM FROM LI-ION BATTERIES**

(71) Applicant: Karlsruher Institut für Technologie, 76131 Karlsruhe (DE)
(72) Inventor: DOLOTKO, Oleksandr, 76149 Karlsruhe (DE); KNAPP, Michael, 76185 Karlsruhe (DE); EHRENBERG, Helmut, 64291 Darmstadt (DE)
(74) Representative: Müller-Boré & Partner Patentanwälte PartG mbB

(57) **Abstract**

The present invention relates to a mechanochemically induced method for recycling lithium from Li-ion batteries which can be universally applied, and which is highly efficient due to a specific heating step.

## Description

The present invention relates to a method for recycling lithium from Li-ion (lithium-ion) batteries. Specifically, the present invention relates to a mechanochemically induced method for recycling lithium from Li-ion batteries that can be universally applied and which is highly efficient.

Lithium-ion batteries (LIBs) have experienced a leap in their development, especially with shifting their demand from small consumer electronics to the market of electric vehicles and energy storage power batteries. The growth of the use and production imposes the need for infrastructure and strategies to handle LIB waste and potentially recover precious components of batteries without irreversible pollution and damage to the environment. Specifically, the exponentially growing use of LIBs has substantially increased the demand for the constituent elements, namely Li (lithium), Co (cobalt), Ni (nickel), and Mn (manganese). As a result, this has elevated them to "critical elements" status. In addition, spontaneous environmental degradation and leaching of Co from spent LIBs that end up in landfills or are improperly stored, poses significant environmental and health hazards. At present, safe and economical recycling of used LIBs to recover Co, Li, Mn, or Ni represents a considerable technological challenge.

In particular, despite the intensive research activity and progress in the industrial sector, the recycling of lithium currently remains expensive and, in many cases, not profitable. Currently, most recycling technologies are based on hydrometallurgical, biohydrometallurgical, and pyrometallurgical methods.

Pyrometallurgical methods, which are most commonly used in the recycling industry, use high-temperature smelting to prepare multi-metal alloys, comprising Co, Mn, Ni, Fe, Al-containing slags. The inadvertent loss of valuable components such as lithium and carbon/graphite, which are emitted as hazardous gases, and high energy consumption are among the main disadvantages of pyrometallurgical methods.

While more efficient and less hazardous than pyrometallurgy, the biohydrometallurgical approach suffers from a very long processing time, often extending more than 5 to 10 days for complete extraction, and also presents challenges associated with bacterial incubation (acidity and temperature control required).

Hydrometallurgical processes involving the chemical dissolution of spent LIB electrodes by strong acids or bases are energy efficient and usually generate limited amounts of hazardous gases. They offer high metal recovery rates and good purity of recovered materials. However, they utilize highly corrosive leachates. Coupled with the high cost of battery disassembly and separation of electrode materials, industrial utilization of hydrometallurgical processes is limited.

The common steps for a majority of these recycling processes include: (i) a step of materials (batteries) pre-treatment (sorting, discharge, disassembly, shredding, crushing, grinding, and sieving); (ii) a step of chemical conversion, by smelting, leaching or dissolution, and (iii) a step of separation and purification by precipitation, recrystallization, electrolysis, and other appropriate chemical techniques.

All present shortcomings of existing technologies are forcing the scientific community to find alternative methods for LIBs recycling. As a response to all challenges, the mechanochemical approach in recycling processes receives more and more attention. The emerging mechanochemical technology induces chemical reactions between solid materials using mechanical forces such as grinding, extrusion, shearing, and friction as described by L. Takacs, "The historical development of mechanochemistry", Chem. Soc. Rev., 2013, 42, 7649-7659. As described e.g., by Q. Tan et al., "Recycling metals from wastes: a novel application of mechanochemistry", Environ. Sci. Technol. 2015, 49, 5849-5861, this approach is successfully applied in recycling valuable materials from various electronic wastes due to its low cost, scalability and unique reaction mechanism, thermodynamics, and kinetic properties. The mechanochemical approach has also been applied in LIBs recycling. In most cases, the mechanochemical step is utilized in the pre-treatment of the battery materials, thus significantly improving the valuable component recovery via the following hydrothermal process (cf. for instance, J. Guan et al., "Mechanochemical process enhanced Cobalt and Lithium recycling from wasted Lithium-ion batteries", ACS Sustainable Chem. Eng. 2017, 5, 1026-1032).

Further, CN 110791652 A discloses a method for recovering valuable metals in the positive electrode material of waste LIBs based on a mechanochemical method, which is characterized in that an activator and an organic reducing agent are mixed to the positive electrode material of waste LIBs to obtain a mixture, and in that the obtained ball-milled product is added to deionized water having the pH adjusted to 1 to 5. CN 106785167A also discloses a method for recovering lithium in the positive electrode material of waste LIBs, which is characterized in that the cathode material of waste LIBs is calcined at 450 to 550°C for 3 to 7min, to obtain nickel-cobalt-lithium-manganate ternary material, followed by ball-milling and aqueous leaching. CN 105304971 A discloses a method of treating a waste lithium battery by adopting a mechanochemistry method, selectively recycling metal lithium and meanwhile directionally preparing a cobalt-based magnetic functional material, which is characterized in that iron powder and sodium chloride are used as additives to treat waste lithium batteries by ball milling. CN 109437253 A discloses a method of treating a waste lithium battery by adopting a mechanochemistry method, wherein solid dry ice is added to treat waste lithium batteries by ball milling.

Besides, US 2020/318219 A1 describes that solvent-free processing can mechanochemically convert lithium cobaltate (LiCoO₂) into metallic Co and Li-derivatives via reduction reactions. Specifically, US 2020/318219 A1 describes the mechanochemical treatment of battery constituents in the presence of reducing metals (e.g., Li, Ca, Al, etc.), which leads to the reduction of transition metal components of LIB cathodes into ferromagnetic products (Co, Ni, etc.) which can be effectively separated from other nonmagnetic and/or water-soluble by-products by magnetic separation techniques. The general reaction of this process for LiCoO₂ cathode and aluminum (Al) as reducing agent can be described by the following reaction (I):

2LiCoO₂ + 2AI → Li₂O + 2Co + Al₂O₃ (I)

Further processes for lithium recovery are described by the following reactions (II) and (III):

Li₂O + H₂O → 2LiOH (II)

2LiOH + Na₂CO₃ → Li₂CO₃↓ + 2NaOH (III)

The transformation of lithium hydroxide (LiOH) into lithium carbonate (Li₂CO₃) can be performed without adding the sodium carbonate (Na₂CO₃) by using carbon dioxide (CO₂) as shown by the following reaction (IV):

2LiOH + CO₂ → Li₂CO₃↓ + H₂O (IV)

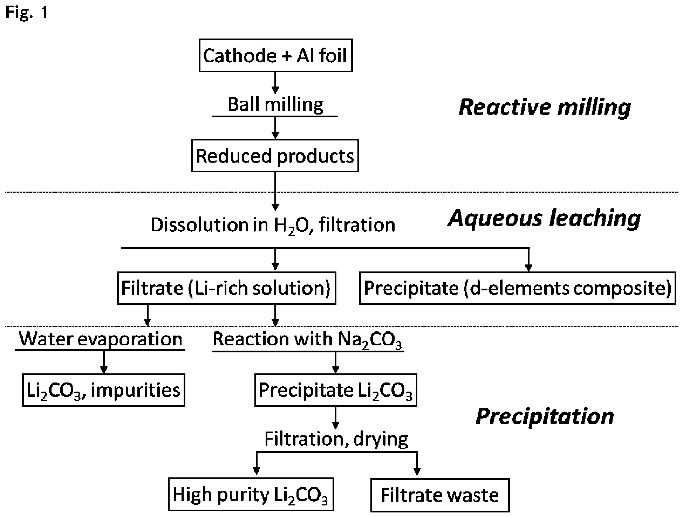

A flowsheet summarizing the processes disclosed in US 2020/318219 A1 is shown in Fig. 1. The lithium extraction process in this method can proceed in two routes. In the first route, pure lithium carbonate can be obtained by precipitation reaction with Na₂CO₃, which requires careful and precise control of component concentrations and temperatures. Therefore, an additional step of solution, precipitation, filtration, and recrystallization is needed. The Li-rich filtrate can also be heated to evaporate water in the second route (Fig. 1, lower part left). As a result, Li₂CO₃ is formed. However, the present inventors have found that the obtained product always contains impurities in significant amounts. Therefore, the presence of impurities does not allow to utilize the recycling process as shown in Fig. 1, lower part left, without route 1 (Fig. 1, lower part right) where Na₂CO₃ is used as a reagent for Li₂CO₃ precipitation.

In view of the above, it is an object of the present invention to overcome the above drawbacks associated with the recycling of lithium from LIBs known in the art. In particular, the technical problem underlying the present invention is to provide a simple and environmentally friendly method for recycling lithium from LIBs by which lithium can be recycled with high efficiency and low costs (improved recycling proficiency) at high purity, and which should be applicable for different LIB chemistries.

The above technical problem underlying the present invention has been solved by providing the embodiments characterized in the claims.

In particular, the present invention provides a method for recycling lithium from a lithium-ion battery, comprising the following steps:
(i) subjecting a cathode material of the lithium-ion battery containing lithium ions in an active cathode material to a mechanical processing in air in the presence of aluminum, thereby mechanochemically reducing the active cathode material;
(ii) adding water to the mechanochemically processed material of step (i), thereby providing an aqueous mixture;
(iii) heating the aqueous mixture to a temperature of 300°C or higher, thereby providing a mixture of dissolved lithium carbonate (Li₂CO₃) and insoluble impurities; and
(iv) separating the insoluble impurities from the mixture, and evaporating water to obtain lithium carbonate (Li₂CO₃),
wherein the method optionally further comprises an additional filtration step between steps (ii) and (iii) of separating an insoluble fraction of the obtained aqueous mixture from the filtrate, wherein the filtrate contains a water-soluble lithium compound, and subjecting said filtrate to the heating step (iii).

Accordingly, the present invention utilizes mechanochemical processing of the battery wastes at the pre-treatment step of the recycling, typical for all recycling technologies mentioned above. The method of the present invention includes the chemical interaction of the active cathode material with Al as a reducing agent in step (i) mentioned above. In the method of the present invention, lithium can be extracted and recycled without applying any corrosive leachates (as only water is used), high temperatures, or high energy consumption, because of fast kinetics of the process. Advantageously, the method of the present invention is capable to increase efficiency at a large scale, foster environmental sustainability, and reduce the overall cost of the LIB recycling process. As will be described in more detail herein-below, the method of the present invention enhances the efficiency of lithium recycling from spent LIBs using a mechanochemical approach. Moreover, the method of the present invention can be regarded as "universal" as it can be applied for most electrode technologies used for LIBs.

A LIB is a type of rechargeable battery composed of cells in which lithium ions move from the negative electrode (anode) through an electrolyte to the positive electrode (cathode) during discharge and back when charging. Li-ion cells use an intercalated lithium compound as the material at the cathode and typically graphite at the anode.

Many cathode materials used for LIBs are constructed from cobalt-based materials, such as LiCoO₂ (LCO) or manganese-based materials, such as LiMn₂O₄ (LMO). However, also other manganese-based materials are known as cathodes for LIBs. For instance, the layered manganese oxides Li₂MnO₃, LiMnO₂, Li₂MnO₂, and combinations in terms of composites of the foregoing oxides are known in the art, which are also encompassed within the present invention. Besides, cathode materials based on lithium-nickel-manganese-cobalt oxides (NMC) having the general formula LiNiₓMn_{y}Co_{z}O₂, wherein the sum of x+y+z is 1, such as Li(Ni_{0.33}Mn_{0.33}Co_{0.33})O₂, as well as cathode materials based on lithium-nickel-cobalt-aluminum oxides (NCA) having the general formula LiNiₓCo_{y}Al_{z}O₂, wherein the sum of x+y+z is 1, such as LiNi_{0.84}Co_{0.12}Al_{0.04}O₂ are known, which are also encompassed within the present invention. Another LIB technology uses lithium iron phosphate (LiFePO₄, LFP) as the cathode material, which is also encompassed within the present invention.

As will be demonstrated by the experimental section below, due to a similar mechanism, the method according to the present invention is advantageously applicable to all of said technologies without being limited to the specific materials mentioned above. Preferably, the cathode material used in the method of the present invention includes at least one material selected from the group consisting of LiCoO₂, Li(Ni_{0.33}Mn_{0.33}Co_{0.33})O₂, LiMn₂O₄, and LiFePO₄. This means that also mixtures of said cathode materials can be used.

As mentioned above, in the first step (i) of the method of the present invention, the cathode material of the LIB is subjected to a mechanical processing in air in the presence of aluminum, thereby mechanochemically reducing the active cathode material, i.e., the transition metal oxide of LCO, LMO, NMC, NCA, and LFP, for instance. This step can be carried out similarly to the process described in US 2020/318219 A1, provided that Al is used as a reducing agent, allowing this step to be carried out under air. That is, no inert atmosphere is required.

The general reaction of this process step for LiCoO₂ cathodes is described in US 2020/318219 A1 by the reaction (I):

2LiCoO₂ + 2AI → Li₂O + 2Co + Al₂O₃ (I)

Metallic Co formed in said reaction (I) can be easily separated from the non-magnetic by-products via a magnetic separation process and used as is or further purified if appropriate and required. As another reaction product, Li₂O is mentioned, which is soluble in water.

However, the inventors of the present invention have reconsidered the above reaction (I) and have found that the mechanochemical reduction reaction of LiCoO₂ with Al as a reducing agent can be described more appropriately by the following reaction equation (1), where feasible reaction intermediates are given in parentheses:

2LiCoO₂ + 2AI → 2Co + {Li₂O + Al₂O₃} (1)

In general terms, said reaction can be formulated by the following reaction equation (7):

2LiMO₂ + 2AI → 2M + {Li₂O + Al₂O₃} (7)

where M represents a transition metal or a composite thereof used in LIBs as cathode, such as Co, Mn, Ni, Fe, and composites thereof.

Accordingly, as can be taken from reaction equation (1) or (7), even though the molar ratio of the cathode material (such as LCO) in terms of M equivalents and Al in the mechanochemical processing step (i) is not limited, according to a preferred embodiment of the present invention, said constituents are used in a molar ratio in terms of M equivalents and Al of 1:3 to 2:1 depending on the transition metal or metal composite present in the starting cathode material. More preferably, said constituents are used in about an equimolar ratio, and most preferably in a molar ratio of 1:1 for LCO-AI, NMC-AI, and NCA-AI systems. For LMO-AI systems, it is preferred to use the constituents in a molar ratio of 1:2 to 1:3 and for LFP-AI systems, a molar ratio of 1:3 is preferred. Here, the expression "M equivalents" refers to the transition metal or metal composite present in the starting cathode material, such as Co, Mn, Ni, Fe, and composites thereof.

According to the present invention, Al is used as the reducing agent in the mechanochemical reduction reaction of step (i). Al may be added to the cathode material of the LIB so as to adjust the molar ratio of the components. To assure the complete lithium recycling, Al can be added to the reaction mixture in excess. Since an Al foil is commonly present as a current collector in LIB cathodes, it is also possible that no additional Al or at least a reduced amount of Al is required for the reduction. Generally, Al can be used in step (i) of the method of the present invention in the form of powder and/or as shredded Al scrap without being limited thereto.

As mentioned above, in the method of the present invention, unlike recycling processes known in the art, lithium can be extracted and recycled without applying any corrosive leachates since only water is used. Here, it should be note that the water is not particularly limited, and any technical grade of pure water can be used. Preferably, in order to minimize any by-products, in the method of the present invention, deionized (DI) water is used throughout all process steps.

According to a preferred embodiment, no acid and/or no carbonate salt is used in all of the process steps (i) to (iv). This means that in the method of the present invention, lithium can be recycled without applying any corrosive or hazardous material. Also, contrary to the process described in US 2020/318219 A1, it is not necessary to add any carbonate salt in order to purify the desired lithium carbonate (Li₂CO₃). In said process, an extra ion (Na⁺) has to be introduced at the precipitation stage, which can be avoided by the method of the present invention.

Furthermore, the mechanical processing in the mechanochemical reduction reaction of step (i) can include, but is not limited to, ball milling, shredding, grinding, and/or extruding and combinations thereof, which can be generally used for processing LIB electrode materials. In a preferred embodiment, the mechanochemical processing step (i) includes ball milling. The ball milling as well as other mechanical processing techniques may be carried out until the reduction reaction has been completed, which may or may not be followed by analysis. For instance, due to its magnetic nature, metallic Co and its composites are easily attracted by a permanent magnet. Therefore, one of the visual signs of the reduction process of LiCoO₂ (which is nonmagnetic) is the formation of the magnetic phase. Reduction of Co in the LiCoO₂ by Al is started already after 30 minutes of milling, which is distinguishable by the appearance of the broad Bragg reflection at ~45° of 2θ and formation of the magnetic phase. Thus, the ball milling may be carried out for about 0.5 to 3 hours, depending on the milling conditions (balls to sample ratio, milling vial material, rotation speed in planetary mills, etc.).

The conditions may be those commonly applied. For instance, the starting materials (cathode material of the LIB and AI) can be combined in an appropriate molar ratio and ball-milled for 0.5 to 3 hours in a hardened-steel vial of appropriate size with steel balls using a shaker mill.

Even though not excluded, the mechanochemical processing step (i) of the present invention is preferably conducted in the absence of any additive and solvent. That is, in the mechanochemical processing step (i), only the cathode material of the LIB and Al are processed under air atmosphere, resulting in the reduction of the active cathode material (LCO, LMO, NMC, NCA, LFP etc.).

As mentioned above, US 2020/318219 A1 describes a mechanochemical processing step similar to step (i) of the method of the present invention. Specifically, as shown in Fig. 1, lower part left, after dissolution in water (H₂O) and filtration, in the Li-rich filtrate Li₂CO₃ is formed after water evaporation. However, the present inventors have found that the obtained product always contains impurities in significant amounts. Therefore, the presence of impurities does not allow to utilize the recycling process as shown in Fig. 1, lower part left, without the addition of Na₂CO₃ as a reagent for Li₂CO₃ precipitation (Fig. 1, lower part right).

According to the present invention, it has been found that the impurity contained in the product obtained by the process shown in Fig. 1, lower part left, is Li₂Al₄(CO₃)(OH)₁₂·3H₂O (LACHH). Based thereon, the above-mentioned reaction (I) has been reconsidered.

Specifically, according to the present invention, the mechanochemical reduction reaction of LiCoO₂ with Al as a reducing agent can be described by reaction equation (1), where feasible reaction intermediates are given in parentheses:

2LiCoO₂ + 2AI → 2Co + {Li₂O + Al₂O₃} (1)

According to the XRD data, which will be described below in the experimental section, the newly formed oxides of lithium and aluminum oxides further interact with the formation of γ-LiAlO₂ as shown by reaction equation (2):

Li₂O + Al₂O₃ → 2LiAlO₂ (2)

Even though it remains unclear what happens to γ-LiAlO₂ upon prolonged milling, as all phases, except metallic composite, become XRD amorphous, it has been demonstrated that the aqueous leaching process, followed by filtration of the solid residue, results in Li₂CO₃ and lithium aluminum carbonate hydroxide hydrate, Li₂Al₄(CO₃)(OH)₁₂·3H₂O (LACHH). The formation of these products can be explained by the presence of the reactions of equations (3) to (5), which may take place simultaneously during aqueous leaching and drying processes performed in the air atmosphere.

{Li₂O + Al₂O₃} + H₂O → {LiOH + LiₓAlOₓ(OH)_{z} + Al₂O₃} (3)

2LiOH + CO₂ → Li₂CO₃ + H₂O (4)

{LiₓAlOₓ(OH)_{z}} + H₂O + CO₂ → Li₂Al₄(CO₃)(OH)₁₂·3H₂O (5)

Based on this finding, the method of the present invention incorporates a heating step (iii) in which the aqueous mixture is heated to a temperature of 300°C or higher, thereby transforming LACHH into Li₂CO₃ and providing a mixture of dissolved Li₂CO₃. That is, the lithium compound present in the aqueous mixture is transformed into Li₂CO₃ by heating the sample to a temperature of 300°C or higher, preferably of 330°C to 370°C, and most preferably to 350°C in the air atmosphere. The duration of this heating step is not particularly limited and may be 1 to 5 hours, such as about 3 hours. Under these conditions, LACHH mixed carbonate decomposes with the formation of Li₂CO₃ and Al₂O₃ as shown by the following reaction equation (6):

Li₂Al₄(CO₃)(OH)₁₂·3H₂O → Li₂CO₃ + 2Al₂O₃ + 9H₂O↑ (6)

According to the present invention, this step of transforming LACHH as an impurity into Li₂CO₃ can be adopted in two ways.

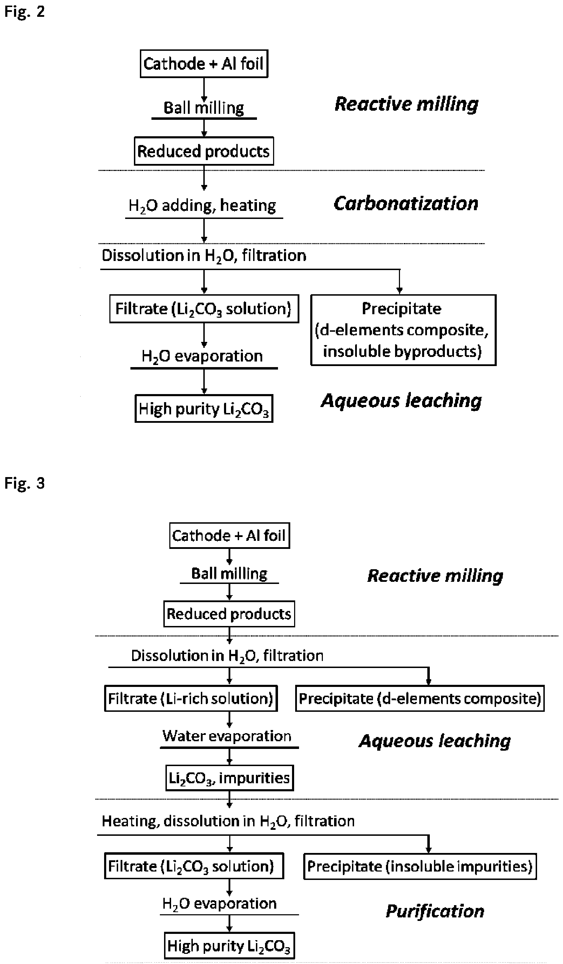

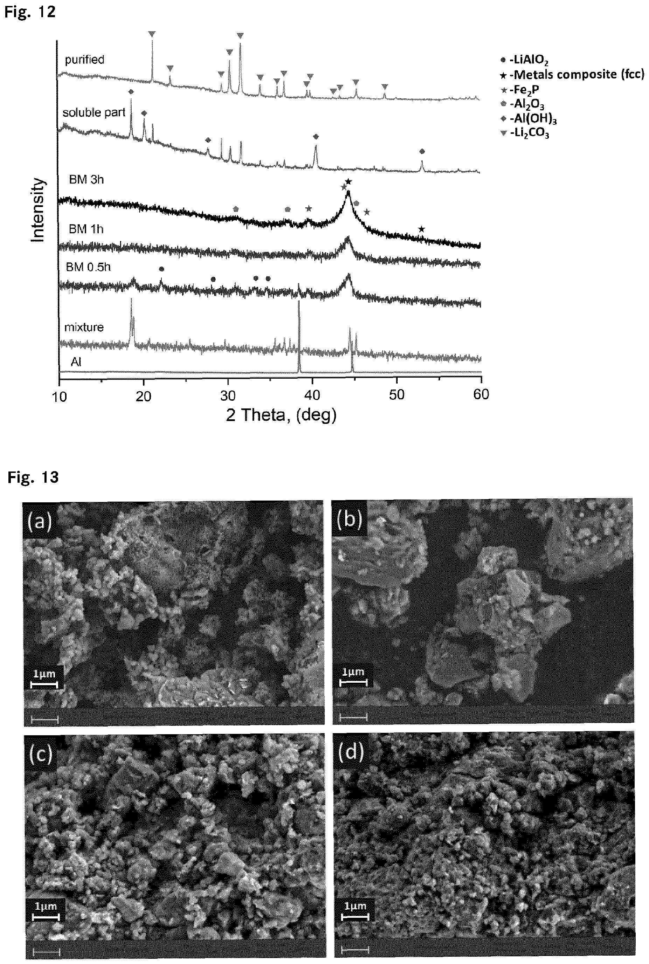

In a first aspect of the present invention, this step of transforming LACHH is carried out in terms of a carbonatization step after the mechanochemical reduction reaction of step (i) as shown in Fig. 2. According to a second aspect of the present invention, this step of transforming LACHH is carried out in terms of a purification step after an aqueous leaching step as shown in Fig. 3.

Thus, the present invention encompasses in a first aspect a method for recycling lithium from a lithium-ion battery, which comprises the following steps:
(a 1) subjecting the cathode material of the lithium-ion battery containing lithium ions in the active cathode material to a mechanical processing in air in the presence of aluminum, thereby mechanochemically reducing the active cathode material (corresponding to the mechanochemical reduction reaction of step (i));
(a2) adding water to the mechanochemically processed material of step (a1) and heating the mixture to a temperature of 300°C or higher;
(a3) adding water to the heated mixture obtained in step (a2), thereby providing a mixture of dissolved lithium carbonate (Li₂CO₃) and insoluble impurities; and
(a4) separating the insoluble impurities from the dissolved lithium carbonate, and evaporating water to obtain lithium carbonate (Li₂CO₃).

In a second aspect, the present invention provides a method for recycling lithium from a lithium-ion battery, which comprises the following steps:
(b 1) subjecting the cathode material of the lithium-ion battery containing lithium ions in the active cathode material to a mechanical processing in air in the presence of aluminum, thereby mechanochemically reducing the active cathode material (corresponding to the mechanochemical reduction reaction of step (i));
(b2) subjecting the mechanochemically processed material of step (b1) to an aqueous leaching at room temperature by adding water to the mechanochemically processed material, and separating the insoluble fraction of the obtained mixture from the filtrate, wherein the filtrate contains a water-soluble lithium compound;
(b3) heating the filtrate obtained in step (b2) to a temperature of 300°C or higher, thereby providing a mixture of dissolved lithium carbonate (Li₂CO₃) and insoluble impurities; and
(b4) separating the insoluble impurities from the mixture obtained in step (b3), and evaporating water to obtain lithium carbonate (Li₂CO₃).

In the following, steps (a2) to (a4) and (b2) to (b4) of the methods according to the present invention are described in detail by reference to the Figures, particularly Figures 2 and 3 which show these steps in a schematic manner. Notably, steps (a1) and (b1) correspond to the mechanochemical reduction reaction of step (i) described above, and thus needs not to be described again.

### The Figures show:

**Figure** 1 shows a flowsheet of the recycling process for lithium extraction disclosed in US 2020/318219 A1.
**Figure** 2 shows a flowsheet of the recycling process for lithium extraction according to the first aspect of the present invention.
**Figure** 3 shows a flowsheet of the recycling process for lithium extraction according to the second aspect of the present invention.
**Figure 4** shows XRD patterns of the 1:1 molar mixture of LiCoO₂ and Al of Example 1, measured after different ball milling times (BM) in a SPEX mill. XRD patterns of starting materials LCO and Al are presented for comparison. The most intensive Bragg reflections of intermediate and final products are marked for analysis.
**Figure 5 (a)** shows a SEM image of the LCO powder of Example 1, **(b)** ball milled with Al foil for 0.5 hours, **(c)** for 1 hour, **(d)** for 3 hours.
**Figure 6** shows XRD patterns of the 1:1 molar mixture of Li(Ni_{0,33}Mn_{0,33}Co_{0,33})O₂ and Al of Example 2 measured after different ball milling times (BM) in a SPEX mill. XRD patterns of starting materials NMC and Al are presented for comparison. The most intensive Bragg reflections of intermediate and final products are marked for analysis.
**Figure 7 (a)** shows a SEM image of the NMC powder of Example 2, **(b)** ball milled with Al foil for 0.5 hours, **(c)** for 1 hour, **(d)** for 3 hours.
**Figure 8** shows XRD patterns of the 1:2.33 molar mixture of LiMn₂O₄ and Al of Example 3 measured after different ball milling times (BM) in a SPEX mill. XRD patterns of starting materials LMO and Al are presented for comparison. The most intensive Bragg reflections of intermediate and final products are marked for analysis.
**Figure 9 (a)** shows a SEM image of the LMO powder of Example 3, **(b)** ball milled with Al foil for 0.5 hours, **(c)** for 1 hour, **(d)** for 3 hours.
**Figure 10** shows XRD patterns of the 1:3 molar mixture of LiFePO₄ and Al of Example 4 measured after different ball milling times (BM) in a SPEX mill. XRD patterns of starting materials LFP and Al are presented for comparison. The most intensive Bragg reflections of intermediate and final products are marked for analysis.
**Figure 11 (a)** shows a SEM image of the LFP powder of Example 4, **(b)** ball milled with Al foil for 0.5 hours, **(c)** for 1 hour, **(d)** for 3 hours.
**Figure 12** shows XRD patterns of the mixture of cathodes with Al of Example 5 measured after different ball milling times (BM) in a SPEX mill. XRD patterns of starting materials (cathode physical mixture and Al) are presented for comparison. The most intensive Bragg reflections of intermediate and final products are marked for analysis.
**Figure 13 (a)** shows a SEM image of the mixture of cathodes of Example 5, **(b)** ball milled with Al foil for 0.5 hours, (c) for 1 hour, **(d)** for 3 hours.
**Figure 14** shows XRD patterns of the 1:1 molar mixture of LiCoO₂ and Al of Example 6, measured after 3 hours ball milling time (BM) in a SPEX mill. XRD patterns of starting materials LCO and Al are presented for comparison. The most intensive Bragg reflections of intermediate and final products are marked for analysis.
**Figure 15** shows XRD patterns of the 1:1 molar mixture of Li(Ni_{0,33}Mn_{0,33}Co_{0,33})O₂ and Al of Example 7 measured after 3 hours ball milling time (BM) in a SPEX mill. XRD patterns of starting materials NMC and Al are presented for comparison. The most intensive Bragg reflections of intermediate and final products are marked for analysis.
**Figure 16** shows XRD patterns of the 1:2.33 molar mixture of LiMn₂O₄ and Al of Example 8 measured after 3 hours ball milling time (BM) in a SPEX mill. XRD patterns of starting materials LMO and Al are presented for comparison. The most intensive Bragg reflections of intermediate and final products are marked for analysis.
**Figure 17** shows XRD patterns of the mixture of cathodes with Al of Example 9 measured after 3 hours ball milling time (BM) in a SPEX mill. XRD patterns of starting materials (cathode physical mixture and Al) are presented for comparison. The most intensive Bragg reflections of intermediate and final products are marked for analysis.
**Figure 18** shows a comparison of the lithium recycling proficiency for different cathode materials and different processes of Examples 1 to 9.

According to the first aspect of the present invention, a specific embodiment of which is shown in Fig. 2, the step of transforming LACHH is carried out in terms of a carbonatization step after the mechanochemical reduction reaction of step (i) (also referred to as "reactive milling") as shown in Fig. 2. During this carbonatization step, the mechanochemically processed material is mixed with water and heated to a temperature of 300°C or higher, preferably of 330°C to 370°C, and most preferably to 350°C. In this regard, it should be noted that this heating step is preferably carried out in the air atmosphere. The duration of this heating step is not particularly limited and may be 1 to 5 hours, such as about 3 hours at a temperature of 300°C or above.

This heating step (carbonatization) is preferably carried out in a stepwise manner by heating the mixture to a temperature of 80°C to 100°C for 0.5 to 3 hours upon stirring, a step of aging the mixture by holding the mixture at a temperature of at least 60°C for at least 2 hours, and thereafter increasing the temperature to at least 300°C. In the presence of CO₂ from the air and added H₂O, all lithium in the mixture transforms into Li₂CO₃ and LACHH compounds via the reactions of equations (4) and (5). Next, at a temperature of at least 300°C, the LACHH compound decomposes to Li₂CO₃ and Al₂O₃ (equation 6).

Thereafter, the heated sample is leached with water after cooling, leading to the dissolution of the Li₂CO₃ and filtration of the insoluble part (mixture of Al₂O₃ and residual metal composites (by-products)). The high solubility rate of Li₂CO₃ at room temperature (which refers in the present invention to a temperature of 20°C to 25°C) allows performing this step at ambient conditions. In the final step of the method of the present invention, water is evaporated to obtain Li₂CO₃ in a highly pure form.

In addition to the carbonatization step described above, in a second aspect of the present invention, after the mechanochemical reduction reaction of step (i) ("reactive milling"), the processed material is subjected to an aqueous leaching at room temperature by adding water to the mechanochemically processed material. Thereafter, the insoluble fraction of the obtained mixture, which mainly consists of precipitated transition metals (d-block elements) or composites thereof, is separated from the filtrate. The filtrate contains a water-soluble lithium compound (cf. also reaction equations (1) to (5) above).

According to the present invention, this filtrate is heated to a temperature of 300°C or higher, thereby transforming LACHH into Li₂CO₃. In this regard, it should be noted that this heating step is preferably carried out in air.

Also, according to a preferred embodiment of the present invention, before heating, water of the aforementioned filtrate may be evaporated so as to obtain a powder mixture. In a subsequent step, this powder mixture can be dissolved again which is then subjected to the heating step (b3) as it is also shown in Fig. 3. However, this additional step is optional. As mentioned above, the aqueous mixture is heated in this heating step to a temperature of 300°C or higher, preferably of 330°C to 370°C, and most preferably to 350°C in the air atmosphere. The duration of this heating step is not particularly limited and may be 1 to 5 hours, such as about 3 hours. After said heating, dissolved Li₂CO₃ and insoluble impurities (mainly Al₂O₃) are obtained. The insoluble impurities can be separated from Li₂CO₃ by filtration.

In the final step of the method of the present invention, water is evaporated to obtain Li₂CO₃ in a highly pure form.

As shown by the experimental data below, the first aspect of the present invention, i.e., the introduction of the carbonatization step, significantly increases the yield of the method according to the second aspect. In addition, the number of required process steps can be reduced, thereby simplifying the entire recycling process. As a result, the total cost of the method according to the first aspect can be further decreased.

It is assumed that by the mechanochemical reduction reaction of step (i) (reactive milling), not all lithium is transformed into water-soluble compounds. A reason for that might be the formation of an intermediate compound, LiAlO₂, formed after 30 minutes of milling, that might be amorphous and, therefore, not detectable with XRD. This compound might only be partially soluble in water at room temperature, thus remains in the precipitate after water leaching. However, in the carbonatization step it transforms to LACHH compound via reaction equation (10):

4LiAlO₂ + 9H₂O + 2CO₂ → Li₂Al₄(CO₃)(OH)₁₂·3H₂O + Li₂CO₃ (10)

Therefore, it is considered that introducing the carbonatization step not only reduces the number of required steps, but also increases the lithium yield and therefore, significantly reduces the total cost of the process. Advantageously, this approach is applicable to all electrode technologies used for LIBs.

Therefore, the method according to the present invention provides a universal approach for recycling lithium from LIBs. Compared to the state of the art, the present invention allows the reduction of the total cost of the process and significantly increases the recycling proficiency. Notably, even though only water is used in the recycling process, thereby avoiding any additional components, such as acids, other corrosive leachates, carbonates etc., it is possible to obtain Li₂CO₃ in high purity, which represents an enormous simplification of the lithium recovery from LIBs yet being environmentally friendly. The method of the present invention works even with mixtures of electrodes, which is convenient for industry, when sorting of batteries is rather impossible as different manufacturers are using their own technologies and chemistries for electrodes.

The present invention is further illustrated by the following Examples without, however, being limited thereto.

### Examples

*The following materials were used in Examples 1 to 9:*
LiCoO₂ (97 wt. %) was purchased from Alfa Aesar; LiMn₂O₄ (> 99%) was purchased from Sigma-Aldrich; LiFePO₄ (~98.5%, coated by carbon) was purchased from MTI Corporation; and Li(Ni_{0.33}Mn_{0.33}Co_{0.33})O₂ was purchased from BASF, Germany. Aluminum foil (from Novelis) served as a source of Al in selected experiments. All materials were used as received.

### Materials characterization

Phase analysis of the reaction products was carried out using the X-ray powder diffraction (XRD) on a STOE Stadi P powder diffractometer with monochromatic Cu-Kα₁ radiation (λ = 1.54056 Å) in transmission geometry. The XRD measurements were performed at room temperature with a 0.015° 2θ step between 10 and 70 degrees of 2θ. The Kapton film's presence visibly adds amorphous-like background in the XRD patterns at 10° < 2θ < 17°. The microstructural properties of the materials were studied by using scanning electron microscopy (SEM). Images of the starting materials and products of the milling were collected using the MERLIN Scanning Electron Microscope from Carl Zeiss.

### General information on the lithium extraction procedure used in Examples 1 to 9

In Examples 1 to 9, the lithium extraction processes started with the reactive milling step. In Examples 1 to 5, employing the process steps according to the second aspect of the present invention, the reactive milling step was followed by aqueous leaching at room temperature and purification of the final product (also referred to as "process 1"). In Examples 6 to 9, employing the process steps according to the first aspect of the present invention, the reactive milling step was followed by a carbonatization and heating procedure (also referred to as "process 2"). Thereafter, this process was finished by aqueous leaching and obtaining pure Li₂CO₃.

### a) Reactive milling:

About 2g of a mixture of starting materials are combined in an appropriate molar ratio and ball-milled for 0.5-3 hours in a 65 ml hardened-steel vial with 20g of steel balls using a SPEX 8000 shaker mill. Al foil was cut into pieces of 1-2 cm sizes before the milling. All experiments were performed in the air atmosphere.

### b) Aqueous leaching:

The milled or carbonized samples are combined with deionized (DI) water and stirred for a few minutes in the air. Then, the insoluble fraction of the obtained mixture was filtered through a paper filter using a vacuum pump. The filtrate was further heated on the heating plate to evaporate the main part of the water and dried entirely at 70°C overnight.

### c) Purification:

To purify the Li₂CO₃ after aqueous leaching in Examples 1 to 5, the obtained product was heated in the muffle furnace to 350°C for 3 hours in the air. The heated sample was mixed with DI water and filtrated. The water-soluble part contains pure Li₂CO₃, which was further recrystallized by water evaporation.

### d) Carbonatization:

To transform the lithium compounds into carbonate in Examples 6 to 9, the ball-milled samples (about 1g) were mixed with DI water (-50 ml) in a 200 ml beaker and heated to 90°C for 1 hour upon stirring. After that, the sample in the beaker was left at 70°C overnight. Next, the beaker with the sample was transferred to an oven and heated to 350°C for 3 hours.

### Example 1 - Lithium extraction procedure according to the second aspect of the present invention from LCO cathode

About 2g of an equimolar mixture of LiCoO₂ and Al (1:1) were ball-milled for 0.5-3 hours in a 65 ml hardened-steel vial with 20g of steel balls using a SPEX 8000 shaker mill.

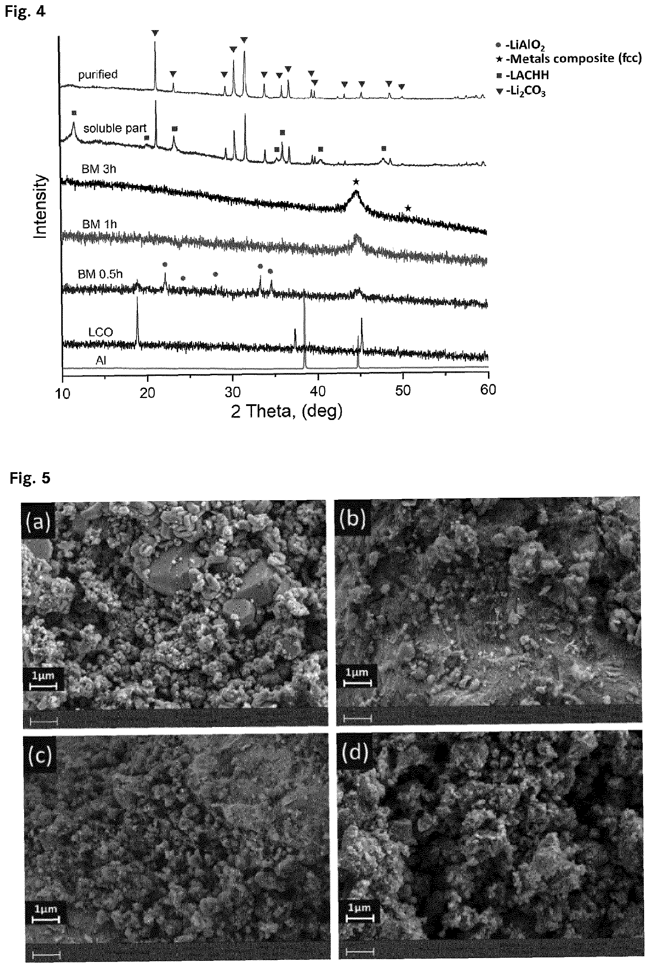

XRD patterns in Fig. 4 show that ball milling for 3 hours produces poorly crystalline material, in which metallic Co-based composite (marked as metallic composite) with a cubic (fcc) structure can be vaguely distinguished by the presence of broad reflection at ~45° of 2θ. Due to its magnetic nature, metallic Co and its composites are easily attracted by a permanent magnet. Therefore, one of the visual signs of the reduction process of LiCoO₂ (which is nonmagnetic) is the formation of the magnetic phase. Reduction of Co in the LiCoO₂ by Al is started already after 30 minutes of milling, which is distinguishable by the appearance of the broad Bragg reflection at ~45° of 2θ and formation of the magnetic phase. Before the complete reduction, the formation of the intermediate phase γ-LiAlO₂(tetragonal structure, space group P4₁2₁2) was observed after 30 minutes of mechanochemical treatment (Fig. 4). Continuation of the milling for 1 hour leads to the disappearance of the Bragg reflections of the γ -LiAlO₂ phase, while only a broad peak of the metallic composite remains visible.

The morphology change of the sample upon milling was investigated using the SEM method. The microscopy images indicate destroying the starting material microstructure and decreasing particle sizes during the mechanochemical reaction as shown in Figs. 5(a)-(d).

The aqueous leaching process, followed by filtration of the solid residue, produces the soluble filtrate, which was recrystallized by water evaporation. According to the XRD analysis (Fig. 4, soluble part), the recrystallized product contains lithium carbonate (Li₂CO₃) and lithium aluminum carbonate hydroxide hydrate, Li₂Al₄(CO₃)(OH)₁₂·3H₂O (LACHH). The formation of these products can be explained by the presence of reactions (Eq. (3)-(5) mentioned above), which may take place simultaneously during aqueous leaching and drying processes performed in the air atmosphere.

The lithium present in the recrystallized soluble part was transformed into lithium carbonate in the purification step by heating the sample after aqueous leaching to 350°C for 3 hours in the air atmosphere. During said heating step, the LACHH mixed carbonate decomposes starting at 250-290°C with the formation of Li₂CO₃ and Al₂O₃.

Subsequently, the heat-treated sample was mixed with water and filtrated, thereby removing the insoluble Al₂O₃ precipitate, and obtaining Li₂CO₃ in pure form after the drying process (Fig. 4, purified). The yield of the recycled lithium was 35.3% of its theoretical value.

### Example 2 - Lithium extraction procedure according to the second aspect of the present invention from NMC cathode

A similar process as in Example 1 was applied to recycle the lithium from an NMC cathode material. The mechanism of reduction reaction of the Li(Ni_{0,33}Mn_{0,33}Co_{0,33})O₂ by Al is the same as in the case of LiCoO₂. In general, it can be expressed by reaction equation (7), where M corresponds to the metallic composite, which contains all d-metals, which were present in the starting cathode material:

2LiMO₂ + 2AI → 2M + {Li₂O + Al₂O₃} (7)

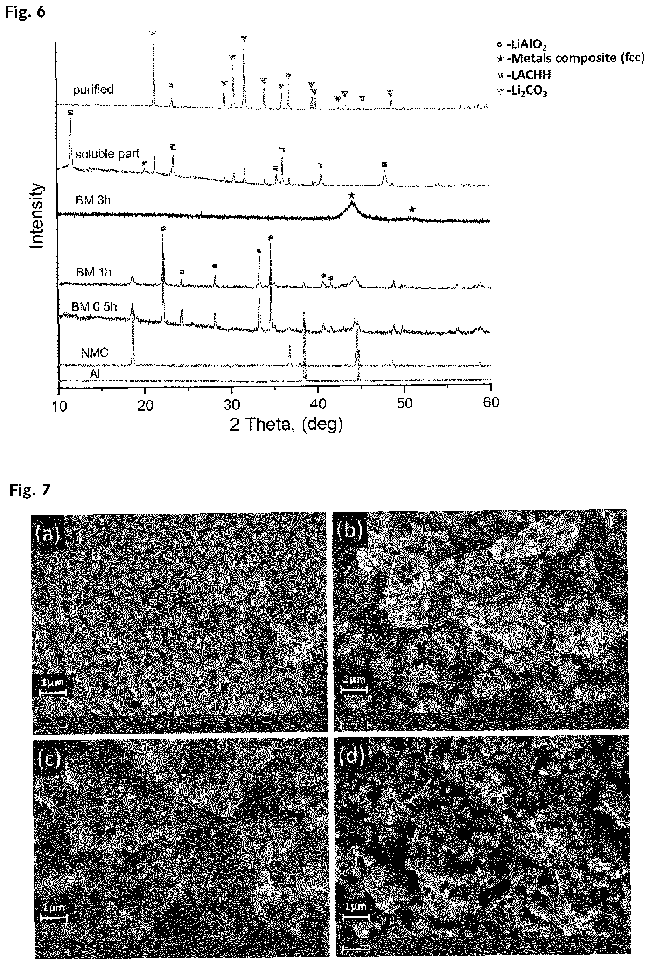

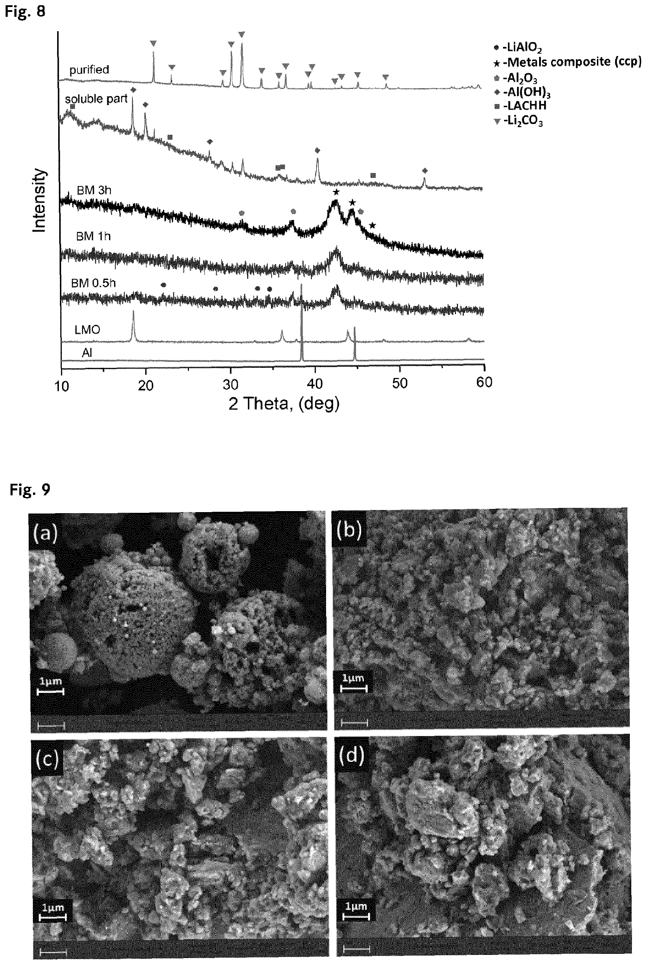

Formation of the intermediate phase LiAlPO₂ was observed in this system after 30 minutes of reaction, which is still present after 1 hour of milling. At the same time, starting materials NMC and Al are still coexisting with intermediate and final products. After the prolonged mechanochemical treatment, they become not detectable by XRD. After 3 hours of milling, only broad Bragg reflections of metallic composite with a cubic (fcc) structure are distinguishable on the XRD pattern (Fig. 6). The SEM investigation showed decreased sizes and destroyed the particles' uniformity upon continuous milling (Fig. 7), leading to broadening reflections on the powder diffraction pattern.

The soluble part of the water leached at room temperature contains Li₂CO₃ and LACHH phases after its recrystallization at 70°C. The single-phase Li₂CO₃ was obtained after the purification process described above for Example 1 (Fig. 6, purified). The yield of the recycled lithium was 34.9% of its theoretical value.

### Example 3 - Lithium extraction procedure according to the second aspect of the present invention from LMO cathode

Following the recycling process of Example 1, lithium was also extracted from the commercial LiMn₂O₄ material. In order to reduce all manganese (Mn⁺³ and Mn⁺⁴) present in the lithium manganese oxide to the metallic Mn⁰, the ratio of the components LiMn₂O₄ to Al was selected as 1 : 2.33 as shown by the following equation (8):

2LiMn₂O₄ + 4.66Al → 4Mn + {Li₂O + 2.33Al₂O₃} (8)

The ball milling of the starting materials for 30 minutes leads to the formation of the LiAlPO₂ compound. As the general amount of lithium in this system is lower, compared to the NMC and LCO containing mixtures, the intensity of the LiAlPO₂ phase is much lower but still distinguishable. The higher amount of aluminum in the mixture leads to increased intensities of Al₂O₃ (space group Fd-3m) product after 1 and 3 hours of milling as shown in Fig. 8. The XRD pattern of the final product of reaction also contains broad Bragg reflections, which correspond to the cubic ccp structure, in which Mn⁰ usually is crystallized. There is a possibility that some Al atoms can be introduced into the structure or cold-welded. Therefore in Fig. 8, this phase is called a metals composite. The SEM characterization of the mixture, milled for different times, shows particles size decrease already after 30 minutes. Further milling does not show a significant change in the sample microstructure (Fig. 9).

The difference compared to the other two systems described before was observed in the composition of the soluble part (Fig 8). The presence of Al(OH)₃ phase (monoclinic structure, space group P2₁/c) was detected by XRD. This phase coexists with minor amounts of Li₂CO₃ and LACHH. The formation of the Al hydroxide can be explained by the coexistence of the strong base (LiOH) and aluminum or aluminum oxide, which may lead to their reaction. However, the purification step leads to the separation of all components from Li₂CO₃. As a result, pure lithium carbonate remains at the end of this process 1 as shown in Fig. 8, purified. The yield of the recycled lithium was 29.8% of its theoretical value.

### Example 4 - Lithium extraction procedure according to the second aspect of the present invention from LFP cathode

A similar process as in Example 1 was applied to recycle the lithium from an LFP cathode material. The molar ratio of starting materials LiFePO₄ and Al was selected as 1:3. Based on the XRD phase analysis, it is found that reduction reaction starts already after 30 minutes of the ball milling. The formation of the LiAlO₂, Al₂O₃, and Fe₂P (space group P-62m) compounds was identified. Further mechanochemical treatment increases the amount of the final products Al₂O₃ and Fe₂P, while the phase LiAlO₂ becomes undetectable after 3 hours of reaction. Based on the phase composition of the final product, the mechanochemical reduction reaction of LiFePO₄ performed on the air atmosphere can be presented as:

2LiFePO₄ + 6Al + 0.25O₂ → Li₂O + Fe₂P + AIP + 2.5Al₂O₃ (9)

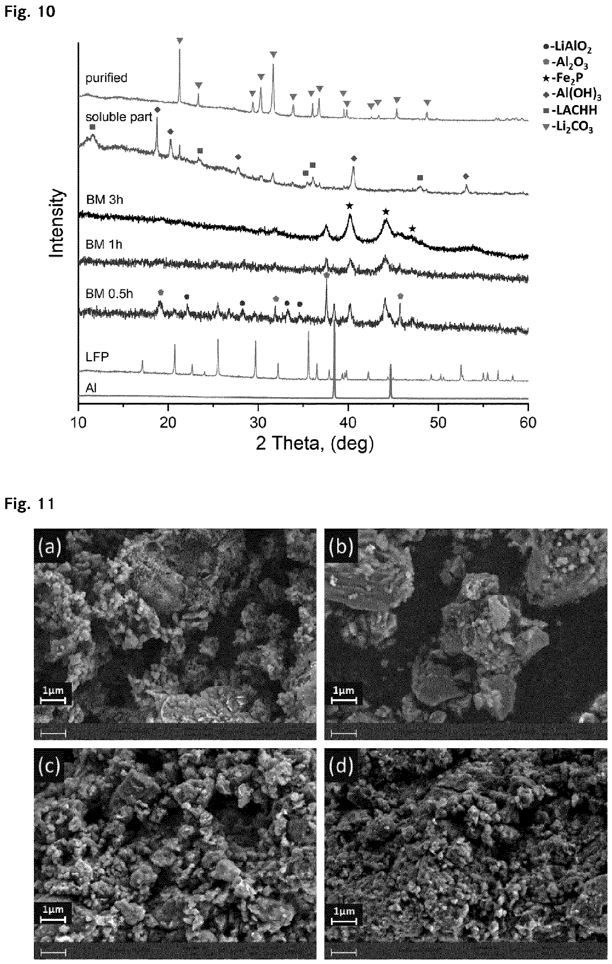

One of the possible products of this reaction, AlP, is not detectable by XRD analysis, which might be explained by the poor crystallinity of the ball-milled materials. The SEM characterization of the milled products of the LiFePO₄-3Al system confirms this idea, showing significant microstructure changes and decreased particle size during the prolonged reaction (Fig. 11).

The soluble part of the water leached at room temperature contains Li₂CO₃, Al(OH)₃, and LACHH phases after its recrystallization at 70°C. The single-phase Li₂CO₃ was obtained after the purification process described above for Example 1 (Fig. 10, purified). The yield of the recycled lithium was 39.6% of its theoretical value.

### Example 5 - Lithium extraction procedure according to the second aspect of the present invention from a mixture of cathode materials

About 2g of the mixture of cathodes and aluminum in a molar ratio of LCO:LMO:NMC:LFP: Al, as 1:1:1:1:7.5, were loaded in the vial and ball milled for 3 hours, similarly to the Example 1. Formation of the intermediate phase LiAlPO₂ was obtained after 30 minutes of treatment (Fig. 12). According to the powder XRD analysis, the final product of the mechanochemical reaction contains a mixture of Al₂O₃, Fe₂P, and poorly crystalline metal composite phase. Therefore, it can be concluded that ball milling leads to parallel reactions (1), (7), (8), and (9) described above. In addition, the ball milling also leads to a particle size decrease, visible in the SEM images presented in Fig. 13.

The process of leaching, which was similar to that described in Example 1, leads to the formation of a mixture of Al(OH)₃ and Li₂CO₃ in the recrystallized water-soluble fraction. The product of the purification process, as described in Example 1, contains pure lithium carbonate (Fig. 12, purified). The calculated yield of the lithium recycling from the mixture of electrodes was 36.4% of its theoretical value.

### Example 6 - Lithium extraction procedure according to the first aspect of the present invention from LCO cathode

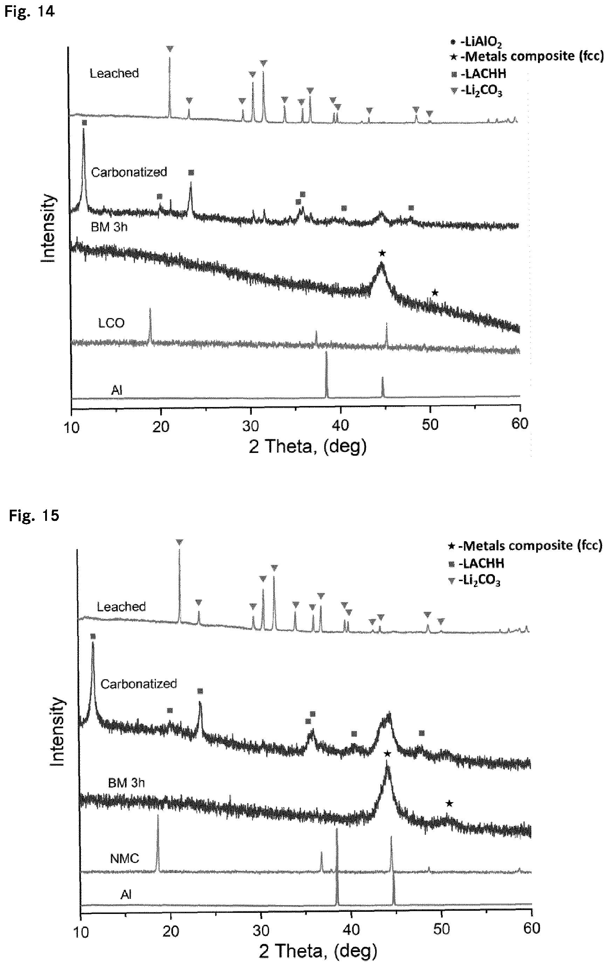

About 1g of an equimolar mixture of LiCoO₂ and Al (1:1) was ball-milled for 3 hours, similar to Example 1 and subjected to the carbonatization procedure. Specifically, the ball-milled material was mixed with water (-50 ml) in a 200 ml beaker and heated to 90°C for 1 hour upon stirring. After that, the sample in the beaker was left at 70°C overnight. In the presence of CO₂ from the air and added H₂O, all lithium in the mixture transforms into Li₂CO₃ and LACHH compounds via reactions (4) and (5) as shown in Fig. 14, carbonatized. Next, the beaker with the sample is transferred to an oven and heated to 350°C for 3 hours. As a result, the LACHH compound decomposes to Li₂CO₃ and Al₂O₃. Finally, the heated sample is leached with water (500 ml), leading to the dissolution of the Li₂CO₃ and filtration of the insoluble part (mixture of Al₂O₃ and residual metal composites). The XRD of the obtained Li₂CO₃ shows no other impurities in the final product as shown in Fig. 14, leached. The yield of the recycled lithium was 74.1%.

### Example 7 - Lithium extraction procedure according to the first aspect of the present invention from NMC cathode

Example 6 was repeated except that NMC material of Example 2 was used. The XRD of the obtained Li₂CO₃ is shown in Fig. 15, leached, verifying that Li₂CO₃ is obtained in pure form. The yield of the recycled lithium was 75.9%.

### Example 8 - Lithium extraction procedure according to the first aspect of the present invention from LMO cathode

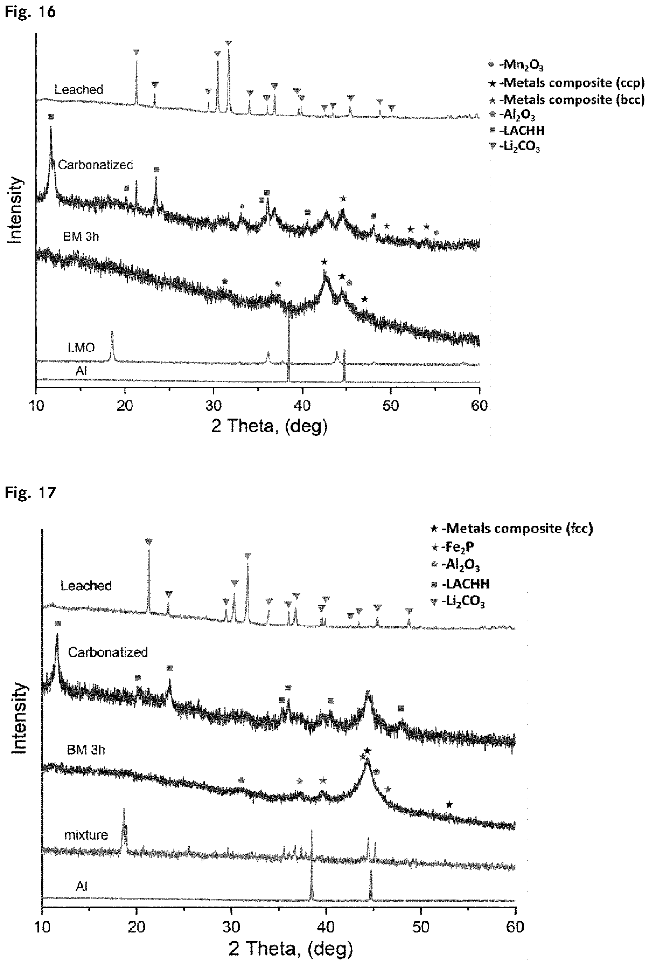

Example 6 was repeated except that LMO material of Example 3 was used. The XRD of the obtained Li₂CO₃ is shown in Fig. 16, leached, verifying that Li₂CO₃ is obtained in pure form. The yield of the recycled lithium was 55.6%.

### Example 9 - Lithium extraction procedure according to the first aspect of the present invention from a mixture of cathode materials

A similar experiment to the Example 6 was performed with the mixture of electrodes, taken in a molar ratio of LCO:LMO:NMC:LFP: Al, as 1:1:1:1:7.5. As shown in Fig. 17, the final Li₂CO₃ recycled from the mixture of cathodes was in a pure form. The yield of the Li recycling in this process was calculated to be 75.2% of its theoretical value.

### Comparison of Examples 1 to 9

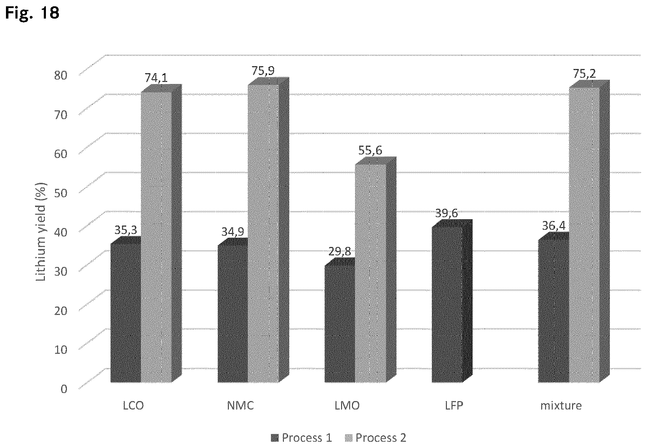

It is observed that the yield of the lithium recovery is significantly higher in the process according to the first aspect of the present invention, as shown in Fig. 18 (denoted as process 2). This can be related to the fact that not all lithium is transformed into water-soluble compounds after the ball milling. The reason for that might be the formation of an intermediate compound, LiAlO₂, formed after 30 minutes of milling, that might be amorphous and, therefore, not detectable with XRD. This compound might only be partially soluble in water at room temperature, thus remains in the precipitate after water leaching. However, in the carbonatization step, it transforms into a LACHH compound via reaction equation (10):

4LiAlO₂ + 9H₂O + 2CO₂ → Li₂Al₄(CO₃)(OH)₁₂·3H₂O + Li₂CO₃ (10)

Therefore, it is considered that introducing the carbonatization step not only reduces the number of required steps, but also increases the lithium yield and therefore, significantly reduces the total cost of the process.

## Claims

1. A method for recycling lithium from a lithium-ion battery, comprising the following steps:
(i) subjecting a cathode material of the lithium-ion battery containing lithium ions in an active cathode material to a mechanical processing in air in the presence of aluminum, thereby mechanochemically reducing the active cathode material;
(ii) adding water to the mechanochemically processed material of step (i), thereby providing an aqueous mixture;
(iii) heating the aqueous mixture to a temperature of 300°C or higher, thereby providing a mixture of dissolved lithium carbonate (Li₂CO₃) and insoluble impurities; and
(iv) separating the insoluble impurities from the mixture, and evaporating water to obtain lithium carbonate (Li₂CO₃),
wherein the method optionally further comprises an additional filtration step between steps (ii) and (iii) of separating an insoluble fraction of the obtained aqueous mixture from the filtrate, wherein the filtrate contains a water-soluble lithium compound, and subjecting said filtrate to the heating step (iii).

2. The method for recycling lithium from a lithium-ion battery according to claim 1, comprising the following steps:
(a1) subjecting the cathode material of the lithium-ion battery containing lithium ions in the active cathode material to a mechanical processing in air in the presence of aluminum, thereby mechanochemically reducing the active cathode material;
(a2) adding water to the mechanochemically processed material of step (a1) and heating the mixture to a temperature of 300°C or higher;
(a3) adding water to the heated mixture obtained in step (a2), thereby providing a mixture of dissolved lithium carbonate (Li₂CO₃) and insoluble impurities; and
(a4) separating the insoluble impurities from the dissolved lithium carbonate, and evaporating water to obtain lithium carbonate (Li₂CO₃).

3. The method for recycling lithium from a lithium-ion battery according to claim 1, comprising the following steps:
(b1) subjecting the cathode material of the lithium-ion battery containing lithium ions in the active cathode material to a mechanical processing in air in the presence of aluminum, thereby mechanochemically reducing the active cathode material;
(b2) subjecting the mechanochemically processed material of step (b1) to an aqueous leaching at room temperature by adding water to the mechanochemically processed material, and separating the insoluble fraction of the obtained mixture from the filtrate, wherein the filtrate contains a water-soluble lithium compound;
(b3) heating the filtrate obtained in step (b2) to a temperature of 300°C or higher, thereby providing a mixture of dissolved lithium carbonate (Li₂CO₃) and insoluble impurities; and
(b4) separating the insoluble impurities from the mixture obtained in step (b3), and evaporating water to obtain lithium carbonate (Li₂CO₃).

4. The method for recycling lithium from a lithium-ion battery according to any one of claims 1 to 3, wherein the cathode material includes at least one material selected from the group consisting of LiCoO₂, Li(Ni_{0.33}Mn_{0.33}Co_{0.33})O₂, LiMn₂O₄, and LiFePO₄.

5. The method for recycling lithium from a lithium-ion battery according to any one of claims 1 to 4, wherein the molar ratio of the cathode material in terms of M equivalents and aluminum in the mechanochemical processing step (i) is from 1:3 to 2:1, wherein M equivalents refers to the transition metal or metal composite present in the cathode material.

6. The method for recycling lithium from a lithium-ion battery according to any one of claims 1 to 5, wherein the aluminum used in the mechanochemical processing step (i) is added to the cathode material of the lithium-ion battery and/or stems at least partially from the current collector of the lithium-ion battery.

7. The method for recycling lithium from a lithium-ion battery according to any one of claims 1 to 6, wherein no acid and/or no carbonate salt is used in all of the process steps (i) to (iv).

8. The method for recycling lithium from a lithium-ion battery according to any one of claims 1 to 7, wherein the mechanochemical processing step (i) includes ball milling.

9. The method for recycling lithium from a lithium-ion battery according to any one of claims 1 to 8, wherein the mechanochemical processing step (i) is conducted in the absence of any additive and solvent.

10. The method for recycling lithium from a lithium-ion battery according to any one of claims 1 to 9, wherein the heating step (iii) is conducted in an air atmosphere.

11. The method for recycling lithium from a lithium-ion battery according to any one of claims 1 to 10, wherein the heating step (iii) is conducted at a temperature of 330°C to 370°C.

12. The method for recycling lithium from a lithium-ion battery according to any one of claims 3 to 11, further comprising after step (b2), a step of evaporating water from the filtrate obtained in step (b2) so as to obtain a powder mixture, and a step of adding water to the obtained powder mixture which is then subjected to the heating step (b3).

13. The method for recycling lithium from a lithium-ion battery according to any one of claims 1, 2 and 4 to 11, wherein the heating step (iii, a2) includes a step of heating the mixture to a temperature of 80°C to 100°C for 0.5 to 3 hours upon stirring, a step of aging the mixture by holding the mixture at a temperature of at least 60°C for at least 2 hours, and thereafter increasing the temperature to at least 300°C.

14. The method for recycling lithium from a lithium-ion battery according to any one of claims 1 to 13, wherein water is the only reagent added to the cathode material of the lithium-ion battery.

15. The method for recycling lithium from a lithium-ion battery according to any one of claims 1 to 14, wherein the water is recirculated.
